# EUROPÄISCHE PATENTSCHRIFT

(11) **EP 0 581 088 B1**
(45) Veröffentlichungstag und Bekanntmachung des Hinweises auf die Patenterteilung: **06.03.1996**
(21) Anmeldenummer: 93111070.4
(22) Anmeldetag: 10.07.1993
(51) Int. Cl.: A01C 7/04

(54) **Unterdruckkammer**
Depression chamber
Chambre de dépression

(30) Priorität: 29.07.1992 DE 9210134 U
(43) Veröffentlichungstag der Anmeldung: 02.02.1994
(73) Patentinhaber: Schoenmaekers, Johannes G., NL-6231 RR Meerssen (NL)
(72) Erfinder: Schoenmaekers, Johannes G., NL-6231 RR Meerssen (NL)
(74) Vertreter: Rauh, Wolfgang K., Dipl.-Ing. Patentanwalt

(56) Entgegenhaltungen:
- EP-A- 0 141 638
- EP-A- 0 195 900
- EP-A- 0 335 497
- US-A- 4 391 450

## Beschreibung

Die Erfindung betrifft eine Unterdruckkammer mit einer umlaufenden, die Unterdruckkammer verschließenden Transport scheibe einer Zuteilvorrichtung, vorzugsweise Einzelkornsämaschine.

Aus dem DE-GM 85 05 231.0 ist ein Säaggregat für Einzelkornsämaschinen bekannt, die eine Unterdruckkammer der vorgenannten Art aufweist. Dabei dient die Transportscheibe zur Aufnahme und zum Transport einzelner Saatkörner aus einem Vorrat zur Ablagestelle, wobei das hinter der Transportscheibe angelegte Vakuum entscheidend mitwirkt.

Bei der bekannten Vorrichtung drückt der äußere Teil der der Unterdruckkammer zugewandten Transportscheibe, die hierzu leicht konisch ausgebildet ist, auf eine ringförmige, im Gehäuse der Unterdruckkammer angeordnete Umfangsdichtung aus mit Graphit versetztem Filz. Dabei entstehen beträchtliche Reibungskräfte, die zu unerwünschter Erwärmung der Transportscheibe und zum raschen Verschleiß der Umfangsdichtung führen.

Bei einer Unterdruckkammer nach der EP-A-141 638 sperrt eine Lippe des Dichtelements die Unterdruckkammer ab. Dazu ist jedoch ein kompliziertes Dichtelement erforderlich, das relativ teuer ist und leicht verschleißt.

Der Erfindung liegt die Aufgabe zugrunde, die bekannte Umfangsdichtung zu verbessern und dabei die vorgenannten Mängel zu vermeiden. Ferner soll durch geeignete Formgebung und Werkstoffauswahl eine geringere Reibwirkung und eine bessere Abdichtung erzielt werden.

Die gestellte Aufgabe wird gemäß der Erfindung durch die kennzeichnenden Merkmale des Anspruches 1 gelöst.

Beim Anlegen der Saugluft hebt sich der O-Ring von seiner Auflage ab und preßt sich infolge des Druckgefälles zwischen der Unterdruckkammer und der Umgebungsluft außerhalb der Transportscheibe fest gegen den Spalt zwischen dieser und dem Gehäuse der Unterdruckkammer und sperrt zugleich durch die Linienberührung zwischen der Transportscheibe und dem Tragkörper die Unterdruckkammer ab. Infolge der geringen Berührungsflächen und der relativ geringen Andrückkräfte treten nur vernachlässigbar geringe Reibkräfte auf. Die Transportscheibe wird praktisch nicht erwärmt.

Im übrigen ist die neue Umfangsdichtung preiswert herstellbar und bedarf keiner Wartung. Außerdem entfällt jegliche Verformung der Transportscheibe.

Nachstehend ist die Erfindung an einem in der Zeichnung dargestellten Ausführungsbeispiel näher erläutert. Es zeigen:
- Fig.1: einen Längsschnitt durch eine vereinfacht dargestellte Unterdruckkammer und
- Fig.2: eine Vergrößerung einer Einzelheit.

Die Zeichnung zeigt in vereinfachter Form eine Unterdruckkammer 1 einer Einzelkornsämaschine.

Sie besteht aus einem trogartigen Gehäuse 2, das in eine Laufbüchse 3 übergeht und einer als Transportscheibe 8 ausgebildeten Abdeckung.

Die Laufbüchse 3 sitzt auf einem, von einer Nabe 4 getragenen Lager 5. Die Nabe 4 sitzt ihrerseits auf einer Antriebswelle 6 und läuft mit dieser um. Die Antriebswelle trägt ein Antriebsritzel 7.

Auf dem freien Ende der Nabe 4 ist eine mit der Antriebswelle 6 umlaufende Transportscheibe 8 befestigt. Sie ist in eine Tragscheibe 9 und eine auf der Tragscheibe 9 befestigte Zuteilscheibe 10 unterteilt.

Im Gehäuse 2 ist eine Öffnung 11 angeordnet, an die eine Sauglufteinrichtung anschließbar ist.

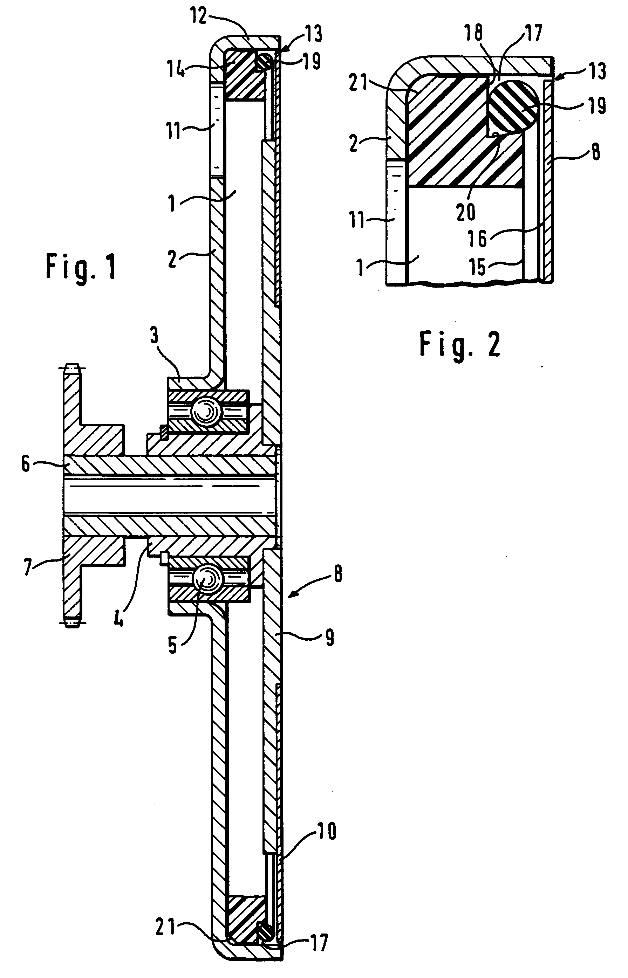

Die Zuteilscheibe 10 bildet mit dem Rand 12 des Gehäuses 2 der Unterdruckkammer 1 einen Spalt 13, den es abzudichten gilt. Zu diesem Zweck ist an der Innenseite des Randes 12 der Unterdruckkammer 1 ein ringförmiger aus einem luftundurchlässigen, elastischen glatten Werkstoff, z.B. Kunststoff bestehender Tragkörper 14 angeordnet, der in Fig.2 im teilweisen Schnitt vergrößert dargestellt ist.

Die Oberseite 15 dieses Tragkörpers 14 endet mit geringem Abstand vor der Unterseite 16 der Transportscheibe 8. Der Tragkörper 14 weist an seinem äußeren oberen Rand eine im Querschnitt stufenförmige Ausnehmung 17 auf, deren Oberseite 18 als Auflage für einen O-Ring 19 aus glattem, luftundurchlässigen elastischen Werkstoff, z.B. Naturgummi, dient. Der Querschnittsdurchmesser des O-Ringes soll größer sein als der Abstand zwischen der Oberseite 15 des Tragkörpers 14 und der Unterseite 16 der Transportscheibe 8.

Die Außenseite 20 des Tragkörpers 14 zwischen dessen Oberseite 15 und der Oberseite 18 der Ausnehmung 17 kann auch zur Ebene der Oberseite 15 hin konisch erweitert sein.

An seiner dem Gehäuseboden zugewandten äußeren Seite kann der Tragkörper 4 zum Ausgleich etwaiger Gehäuserundungen oder Schweißnähte eine Phase 21 aufweisen.

## Patentansprüche

1. Unterdruckkammer mit einer umlaufenden, die Unterdruckkammer verschließenden Transportscheibe einer Zuteilvor richtung, vorzugsweise Einzelkornsämaschine,
**dadurch gekennzeichnet**,
daß entlang der Innenseite des trogförmigen Gehäuses (2) der Unterdruckkammer (1) ein ringförmiger Tragkörper (14) aus luftundurchlässigem Dichtungswerkstoff, z.B. Kunststoff, mit glatter Oberfläche angeordnet ist, dessen Oberseite (15) mit geringem Abstand vor der Unterseite (16) der Transportscheibe (8) endet und an ihrem Außenrand eine im Querschnitt stufenförmige Ausnehmung (17) aufweist, und
daß auf der Oberseite (18) dieser Ausnehmung (17) ein O-Ring (19) aus luftundurchlässigem, elastischem Werkstoff, z.B. Naturgummi, mit glatter Oberfläche ruht, dessen Querschnittsdurchmesser größer ist, als der Abstand zwischen der Oberseite (15) des Tragkörpers (14) und der Unterseite (16) der umlaufenden Transportscheibe (8).

2. Unterdruckkammer nach Anspruch 1, **dadurch gekennzeichnet**,
daß die Außenseite (20) des Tragkörpers (14) zwischen dessen Oberseite (15) und der Oberseite (18) der Ausnehmung (17) sich konisch zur Ebene der Oberseite (15) des Tragkörpers (14) hin erweitert.

## Claims

1. Reduced pressure chamber, having a rotatable conveyor disc of a distributing apparatus, preferably a seed drill for sowing single seeds, which disc closes the reduced pressure chamber, characterised in that an annular supporting body (14), formed from air-impermeable sealing material, e.g. plastics material, with a smooth surface, is disposed along the inside of the trough-like housing (2) of the reduced pressure chamber (1), the top side (15) oh said body terminating shortly in front of the underside (16) of the conveyor disc (8) and having a recess (17), with a step-like cross-section, at its external edge, and in that an O-ring (19), formed from air-impermeable, resilient material, e.g. natural rubber, with a smooth surface, rests on the upper side (18) of this recess (17), the cross-sectional diameter of said O-ring being greater than the spacing between the top side (15) of the supporting body (14) and the underside (16) of the rotatable conveyor disc (8).

2. Reduced pressure chamber according to claim 1, characterised in that the outside (20) of the supporting body (14) between its top side (15) and the upper side (18) of the recess (17) widens conically towards the plane of the top side (15) of the supporting body (14).

## Revendications

1. Chambre de dépression comportant un disque de transport périphérique fermant la chambre de dépression, d'un dispositif de distribution, de préférence un semoir monograine,
caractérisée en ce que le long de la face interne du boîtier (2) en forme de bac de la chambre de dépression (1), est agencé un corps porteur (14) annulaire réalisé en une matière d'étanchéité étanche à l'air, par exemple de la matière synthétique, et présentant une surface lisse, dont la face supérieure (15) se termine à une distance réduite de la face interne (16) du disque de transport (8) et présente sur son bord externe un évidement (17) en forme de gradin en section transversale, et en ce que, sur la face supérieure (18) de cet évidement (17), est montée une bague (19) en forme de O, réalisée en une matière élastique et étanche à l'air, par exemple du caoutchouc naturel, et présentant une surface lisse, dont le diamètre de section transversale est plus grand que la distance entre la face supérieure (15) du corps porteur (14) et la face inférieure (16) du disque de transport périphérique (8).

2. Chambre de dépression selon la revendication 1,
caractérisée en ce que la face externe (20) du corps porteur (14) s'élargit, entre sa face supérieure (15) et la face supérieure (18) de l'évidement (17), de façon conique vers le plan de la face supérieure (15) du corps porteur (14).
